# EUROPÄISCHE PATENTSCHRIFT

(11) **EP 3 207 271 B1**
(45) Veröffentlichungstag und Bekanntmachung des Hinweises auf die Patenterteilung: **03.10.2018**
(21) Anmeldenummer: 15756857.7
(22) Anmeldetag: 12.08.2015
(51) Int. Cl.: F16D 55/224, F16D 65/092

(54) **BREMSBELAGHALTERUNG, INSBESONDERE FÜR EIN SCHIENENFAHRZEUG**
BRAKE LINING MOUNT, IN PARTICULAR FOR A RAIL VEHICLE
DISPOSITIF DE FIXATION DE GARNITURE DE FREIN, EN PARTICULIER POUR VÉHICULE FERROVIAIRE

(30) Priorität: 16.10.2014 AT 507402014
(43) Veröffentlichungstag der Anmeldung: 23.08.2017
(73) Patentinhaber: Siemens AG Österreich, 1210 Wien (AT)
(72) Erfinder: BRAUN, Robert, A-8045 Graz (AT); BUSIC, Illija, A-8600 Bruck a. d. Mur (AT); SCHINAGL, Gerhild, A-8046 Stattegg (AT); ZENZ, Rüdiger, A-8020 Graz (AT)
(74) Vertreter: Maier, Daniel Oliver
(86) Internationale Anmeldenummer: PCT/EP2015/068552
(87) Internationale Veröffentlichungsnummer: WO 2016/058728

(56) Entgegenhaltungen:
- FR-A1- 2 365 726
- GB-A- 1 079 993
- US-A- 1 941 656
- US-B1- 6 349 805

## Beschreibung

Bremsbelaghalterung, insbesondere für ein Schienenfahrzeug, mit einem Belagträger und mindestens einem darauf angebrachten Bremsbelag, sowie einem Belaghalter, wobei der Belagträger einen schwalbenschwanzförmigen Führungssteg aufweist, der im montierten Zustand mit einer schwalbenschwanzförmigen Nut des Belaghalters eine formschlüssige Verbindung bildet und wobei die Verbindung mittels eines Verschlusses arretierbar ist.

In Schienenfahrzeugen kommen mehrere Bremssysteme zur Anwendung. Das sicherheitsrelevanteste Bremssystem dabei ist die Reibungsbremse. Diese wandelt die kinetische- und die Differenz der potentiellen Energie eines Fahrzeuges über zwei Reibpartner in Wärme um.

Der Bremsbelag, der an die Bremsscheibe gepresst wird, ist über den Belaghalter mit dem Aktuator verbunden. Die Verbindung zwischen Belaghalter und dem Verschleißteil Bremsbelag muss so ausgeführt sein, dass die auftretenden Kräfte zuverlässig übertragen werden, Wärmeausdehnungen ausgeglichen werden können und ein schneller Tausch möglich ist.

Dabei ist ein Spiel zwischen Bremsbelag und Belaghalter einerseits notwendig für die Tauschbarkeit, führt aber andererseits durch die auftretenden Vibrationen zu übermäßigen Verschleiß am Bremsbelag und Verriegelungsvorrichtung.

Dieser Verschleiß ist besonders hoch bei schweren Bremsbelägen aus Sinter.

Aus der EP 0 981 695 sind Bremsbelaghalterungen bekannt, welche eine sogenannte Schwalbenschwanzführung aufweisen, und bei denen für den eingeführten Bremsbelag ein stirnseitiger Anschlag und ein nach dem Einschieben des Bremsbelags verschwenkbarer Querriegel vorgesehen ist. Dieser Querriegel kann auch klappbar oder drehbar am Halter geführt sein. Derartige Halter sind als UIC-Halter bekannt.

Bei einer weiteren bekannten Konstruktion sind im Abstand zur Reibbelaglänge am Halter zwei abgesetzte Zapfen vorgesehen, die bei eingesetztem Belagträger von halbkreisförmigen Ausnehmungen des Trägerblechs hintergriffen werden. Das Lösen des Belagträgers vom Belaghalter wird mittels einer einen Haltelappen des Belagträgers hintergreifenden Riegelfeder des Belaghalters verhindert. Es sind auch Belaghalter bekannt, bei welchen der Belag von zwei Zapfen gehalten wird; hierbei befindet sich ein Zapfen an einem schwenkbaren Riegel, der zum Belagtausch geöffnet werden kann.

Für Schienenfahrzeuge, die mit organischen Bremsbelägen ausgestattet sind, ist die Aufnahme der Bremsbeläge in der Vorschrift UIC 541-3 des Internationalen Verbandes der Eisenbahnindustrie beschrieben.

Der Erfindung liegt die Aufgabe zugrunde, den Stand der Technik weiter zu entwickeln.

Erfindungsgemäß wird die Aufgabe gelöst mit einer Bremsbelaghalterung der eingangs genannten Art, bei welcher der Verschluss aus einem mit einem Kopf versehenen Bolzen besteht, der im montierten Zustand durch den schwalbenschwanzförmigen Führungssteg des Belagträgers und den Belaghalter hindurch ragt, und der Belaghalter an der dem Belagträger abgewandten Seite einen zylindrischen Fortsatz aufweist, der zur Aufnahme von zumindest einem, den Bolzen im eingeschobenen Zustand sichernden Federsplint ausgebildet ist.

Durch die Fixierung des Bremsbelags mittels eines spielfreien Bolzens anstelle der herkömmlichen Verriegelungsvorrichtungen wird die Bewegungsfreiheit des Belags behindert und damit der Verschleiß der Führung und der Verriegelung vermindert. Gleichzeitig ist aber weiterhin die leichte Montierbarkeit und die Wärmeausdehnung des Belages gegeben.

Damit wird die Standzeit der Bremsbelagaufnahme erhöht, es werden eine höhere Zuverlässigkeit der Belagverriegelung und damit eine Erhöhung der Sicherheit im Schienenverkehr und eine höhere Verfügbarkeit der Fahrzeuge erreicht.

Die Erfindung wird anhand von drei Figuren näher erläutert. Es zeigen beispielhaft:
Fig. 1 eine Explosivdarstellung der Hauptkomponenten einer Ausführungsform der erfindungsgemäßen Bremsbelaghalterung vor der Montage,
Fig. 2 zwei Ansichten einer Ausführungsform eines Belaghalters mit eingeschobenem und geklemmtem Bolzen und
Fig.3 drei Ansichten einer erfindungsgemäßen Bremsbelaghalterung im montierten Zustand.

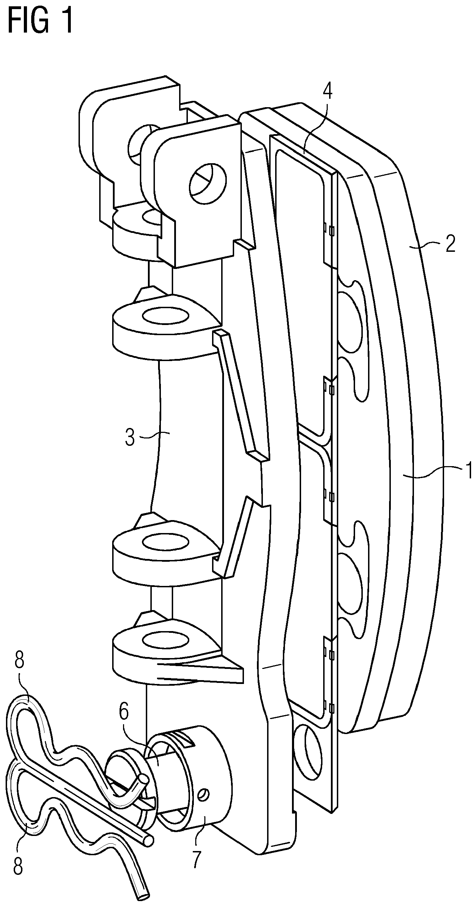

Die Darstellung gemäß Figur 1 zeigt einen Belagträger 1, auf dem ein Bremsbelag 2 befestigt ist. Der Bremsbelag ist in typischer Weise aus Reibmittelsegmenten der Kategorie "Semi-Metallic", "Organic", "Low-Metallic" oder "Ceramic" aufgebaut.

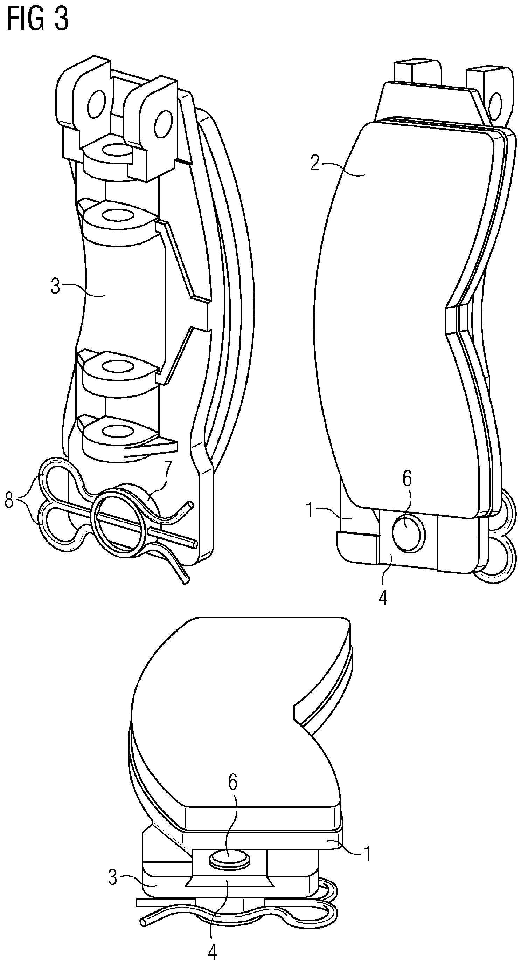

Der Belagträger 1 weist einen schwalbenschwanzförmigen Führungssteg 4 auf, der in eine schwalbenschwanzförmige Nut 5 eines Belaghalters 3 einschiebbar ist, sodass im eingeschobenen Zustand, wie er in Fig. 3 dargestellt ist, eine formschlüssige Verbindung zwischen Belagträger 1 und Belaghalter 3 gegeben ist.

Die Verbindung ist mittels Bolzen 6 arretierbar. Der Bolzen weist einen zylindrischen Schaft und einen ebenfalls zylindrischen Kopf mit gegenüber dem Schaft erhöhtem Durchmesser auf.

Darüber hinaus weist der Kopf an seiner Stirnseite eine Quernut zur Aufnahme des mittigen Schenkels eines zweiflügeligen Federsplints 8 auf.

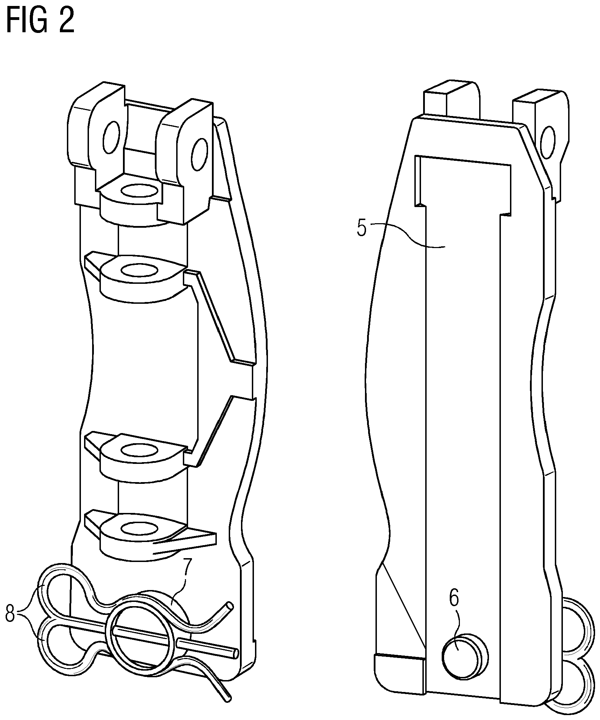

Wie in den Figuren 2 und 3 dargestellt, sichert der Federsplint 8 den Bolzen 6 in seiner eingeschobenen Position in einer fluchtenden Ausnehmung von Belaghalter 3 und schwalbenschwanzförmigem Führungssteg 4 des Belagträgers 1 gegen ein Herausfallen. In dieser Position ruht der Kopf des Bolzens 6 in einem zylindrischen Fortsatz 7 des Belaghalters 3 auf der an der dem Belagträger 1 abgewandten Seite.

Dazu weist der zylindrische Fortsatz 7 seitliche Ausnehmungen zur Aufnahme der gebogenen Außenschenkel des Federsplints 8 auf.

Wie in Figur 3 ebenfalls ersichtlich, ragt die dem Kopf gegenüberliegende Stirnfläche des Bolzens 6 bremsbelagseitig aus dem Führungssteg 4 des Belagträgers 1 hervor.

Gemäß einer weiteren bevorzugten Ausführungsform kann aber vorgesehen werden, dass die Stirnfläche des Bolzens 6 bremsbelagseitig bündig mit dem Führungssteg 4 des Belagträgers 1 abschließt, um so Kollisionen mit anderen Ausformungen der Belagträgergeometrie zu vermeiden.

**Bezugszeichenliste**

| | |
|---|---|
| Belagträger | 1 |
| Bremsbelag | 2 |
| Belaghalter | 3 |
| schwalbenschwanzförmigen Führungssteg | 4 |
| schwalbenschwanzförmige Nut | 5 |
| Bolzen | 6 |
| zylindrischen Fortsatz | 7 |
| Federsplint | 8 |

## Patentansprüche

1. Bremsbelaghalterung, insbesondere für ein Schienenfahrzeug, mit einem Belagträger (1) und mindestens einem darauf angebrachten Bremsbelag (2), sowie einem Belaghalter (3), wobei der Belagträger (1) einen schwalbenschwanzförmigen Führungssteg (4) aufweist, der im montierten Zustand mit einer schwalbenschwanzförmigen Nut (5) des Belaghalters (3) eine formschlüssige Verbindung bildet und wobei die Verbindung mittels eines Verschlusses arretierbar ist, **dadurch gekennzeichnet, dass** der Verschluss aus einem mit einem Kopf versehenen Bolzen (6) besteht, der im montierten Zustand durch den schwalbenschwanzförmigen Führungssteg (4) des Belagträgers (1) und den Belaghalter (3) hindurch ragt, und dass der Belaghalter (3) an der dem Belagträger (1) abgewandten Seite einen zylindrischen Fortsatz (7) aufweist, der zur Aufnahme von zumindest einem, den Bolzen im eingeschobenen Zustand sichernden Federsplint (8) ausgebildet ist.

2. Bremsbelaghalterung nach Anspruch 1, **dadurch gekennzeichnet, dass** die Stirnfläche des Bolzen (6) bremsbelagseitig bündig mit dem Führungssteg (4) des Belagträgers (1) abschließt.

## Claims

1. Brake lining mount, in particular for a rail vehicle, having a lining carrier (1) and at least one brake lining (2) which is attached thereto, and a lining holder (3), wherein the lining carrier (1) has a dovetail-shaped guide web (4) which forms a positively locking connection with a dovetail-shaped groove (5) of the lining holder (3) in the mounted state, and wherein the connection can be locked by means of a closure, **characterised in that** the closure consists of a pin (6) which is provided with a head and, in the mounted state, protrudes through the dovetail-shaped guide web (4) of the lining carrier (1) and the lining holder (3), and that the lining holder (3) has a cylindrical projection (7) on the side which faces away from the lining carrier (1), which projection (7) is configured for receiving at least one spring split pin (8) which secures the pin in the pushed-in state.

2. Brake lining mount according to claim 1, **characterised in that** the end face of the pin (6) terminates on the brake lining side flush with the guide web (4) of the lining carrier (1).

## Revendications

1. Dispositif de fixation de garniture de frein, en particulier destiné à un véhicule ferroviaire, comprenant un support de garniture (1) et au moins une garniture de frein (2) mise en place sur celui-ci, ainsi qu'un porte-garniture (3), dans lequel le support de garniture (1) présente une entretoise de guidage en queue d'aronde (4), qui, à l'état monté, forme une liaison par complémentarité de forme avec une rainure en queue d'aronde (5) du porte-garniture (3) et dans lequel la liaison peut être bloquée au moyen d'un mécanisme de fermeture, **caractérisé en ce que** le mécanisme de fermeture est constitué d'une cheville (6) munie d'une tête, ladite cheville faisant, à l'état monté, saillie à travers l'entretoise de guidage en queue d'aronde (4) du support de garniture (1) et à travers le porte-garniture (3) et le porte-garniture (3) présente, au niveau du côté détourné du support de garniture (1), un prolongement cylindrique (7) qui est réalisé en vue de l'accueil d'au moins une goupille à ressort (8) immobilisant la cheville à l'état vissé.

2. Dispositif de fixation de garniture de frein selon la revendication 1, **caractérisé en ce que** la surface avant de la cheville (6) se termine côté garniture de frein au ras de l'entretoise de guidage (4) du support de garniture (1).
